# EUROPEAN PATENT APPLICATION

(11) **EP 4 779 078 A1**
(43) Date of publication of application: **22.07.2026**
(21) Application number: 24865039.2
(22) Date of filing: 28.06.2024
(51) Int. Cl.: D21H 19/10, A45B 13/00, A47G 19/00, A47G 19/03, A47G 19/22, A47G 21/00, A47G 21/02, A47G 21/04, A47G 21/10, A47G 21/18, B32B 9/02, B32B 29/00, B65D 65/40

(54) **FUNCTIONAL PAPER PRODUCT**

(30) Priority: 15.09.2023 JP 2023150569
(71) Applicant: Marketvision Co.,Ltd., Tokyo 102-0075 (JP); Sato, Toshihiko, Saitama-shi, Saitama 331-0812 (JP)
(72) Inventor: SATO, Toshihiko, Saitama-shi, Saitama 331-0812 (JP)
(74) Representative: Regimbeau
(86) International application number: PCT/JP2024/023633
(87) International publication number: WO 2025/057532

(57) **Abstract**

The present invention provides a functional paper product that is water-resistant, oil-resistant, and recyclable. The functional paper product (1) of the present invention includes a base sheet (20), and a coating (10) formed on the base sheet (20). The coating (10) includes, as a main component, modified mannan obtained by releasing acetyl groups from konjac mannan, and the coating (10) is formed by curing a swollen modified mannan sol having, before curing, a viscosity of 3000 mPa·s or less, in a state where the swollen modified mannan sol is impregnated into inter-fiber voids between cellulose fibers of the base sheet (20).

## Description

### TECHNICAL FIELD

The present invention relates to a functional paper product that is excellent in water resistance, oil resistance, and durability, and is recyclable.

### BACKGROUND ART

Currently, plastic packaging materials, packaging containers, food containers, straws, and the like are used in a variety of situations. They are highly convenient because they are excellent in water resistance and oil resistance and thus can accommodate a variety of items, foods, and beverages. On the other hand, environmental issues have been raised regarding the disposal of plastic packaging materials, packaging containers, food containers, and straws.

There is also a method of laminating a paper product, such as a corrugated board or a paper plate, with a polyethylene film. However, this results in significant increase in the manufacturing cost compared to before, and such laminated paper products are not recyclable.

In this situation, Patent Document 1 discloses an invention of a method for manufacturing a food container, including mixing and stirring water, glucomannan, and an alkali to release acetyl groups to obtain modified mannan whose swelling is inhibited, removing inhibition of swelling of the modified mannan by neutralization to obtain a neutral or acidic mannan sol, applying the mannan sol or the mannan gel obtained by gelating the mannan sol, to a paper food container, and drying the mannan sol or the mannan gel.

According to the invention described in Patent Document 1, food containers can have better water resistance and oil resistance than conventional containers, have a lower environmental impact, and can be manufactured at low cost. Furthermore, the food containers according to the invention described in Patent Document 1 disintegrate in water and are therefore recyclable.

### PRIOR ART DOCUMENT

### PATENT DOCUMENT

Patent Document 1: International Publication No. 2021/166017

### SUMMARY OF THE INVENTION

### PROBLEMS TO BE SOLVED BY THE INVENTION

The swollen modified mannan described in Patent Document 1 has a predetermined viscosity, but to mass-produce paper products at low cost using general-purpose printing equipment owned by paper companies and printing companies, it is necessary to apply the swollen modified mannan to paper at a relatively low viscosity.

In view of the above problem, the present invention aims to provide a functional paper product that can be mass-produced using general-purpose equipment of paper manufacturers and printing companies, is excellent in water resistance, oil resistance, and durability, and is recyclable.

### SOLUTION TO PROBLEM

The inventor has investigated the above problem and has discovered findings that by applying the above-mentioned swollen modified mannan with a reduced viscosity to a base sheet, the swollen modified mannan can be cured in a state where the swollen modified mannan is impregnated into inter-fiber voids between cellulose fibers of the base sheet and intricately entangled with the cellulose fibers.

The present invention has been made based on such findings and provides a functional paper product including, a base sheet, and a coating formed on the base sheet, in which the coating includes, as a main component, modified mannan obtained by releasing acetyl groups from konjac mannan, and the coating is formed by curing a swollen modified mannan sol having, before curing, a viscosity of 3000 mPa·s or less, in a state where the swollen modified mannan sol is impregnated into inter-fiber voids between cellulose fibers of the base sheet.

### ADVANTAGEOUS EFFECT OF THE INVENTION

According to the present invention, it is possible to efficiently and inexpensively mass-produce a functional paper product that is water-resistant and oil-resistant while suppressing generation of konjac odor, acridity, astringency, and the like, in existing facilities of paper manufacturers, printing companies, and the like without requiring to install new application equipment. Furthermore, durability can be imparted in addition to water resistance and oil resistance.

### BRIEF DESCRIPTION OF DRAWINGS

FIG. 1 includes cross-sectional views of (a) a conventional paper product (i.e., a base sheet 10 on which no coating is formed) and (b) a functional paper product 1 according to the present embodiment.
FIG. 2 includes (a) a cross-sectional view of a conventional paper product and (b) a scanning microscope photograph of a surface of the functional paper product according to the present embodiment.
FIG. 3 is a graph showing changes in viscosity over time when the concentration of a swollen modified mannan is 1%.
FIG. 4 is a graph showing changes in viscosity over time when the concentration of the swollen modified mannan is 1.2%.
FIG. 5 is a graph showing changes in viscosity over time when the concentration of the swollen modified mannan is 1.4%.
FIG. 6 is a graph showing changes in viscosity over time when the concentration of the swollen modified mannan is 1% or less.
FIG. 7 is a table showing viscosity reduction rates for different temperature ranges and stirring times, when the concentration of the swollen modified mannan is 1%.
FIG. 8 is a table showing results of a 24-hour verification test using a Gurley-Cobb size tester.
FIG. 9 shows a graph and a table for comparison of the film thickness of the swollen modified mannan sol, between sheets having different smoothnesses.
FIG. 10 is a graph showing results of a water resistance test of a hamburger wrapping paper base sheet to which the swollen modified mannan sol was applied using a No. 5 coating rod.
FIG. 11 is a graph showing results of a water resistance test of a hamburger wrapping paper base sheet to which the swollen modified mannan sol was applied using a No. 48 coating rod.
FIG. 12 shows scanning microscope photographs of paper to which the swollen modified mannan sol was applied. (a) shows the condition of a coated surface to which the swollen modified mannan sol was applied once at a hydration ratio of 300-fold using a No. 5 coating rod. (b) shows the condition of a coated surface to which the same swollen modified mannan sol as (a) was applied twice. (c) shows the condition of a coated surface to which the same swollen modified mannan sol as (a) was applied three times.
FIG. 13 shows scanning microscope photographs of paper to which the swollen modified mannan sol was applied. (a) shows the condition of a coated surface to which the swollen modified mannan sol was applied once at a hydration ratio of 300-fold using a No. 48 coating rod. (b) shows the condition of a coated surface to which the swollen modified mannan sol was applied once at a hydration ratio of 150-fold using a No. 5 coating rod.
FIG. 14 shows (a) an optical microscope photograph of a surface of a sheet to which the swollen modified mannan sol was not applied, and (b) an optical microscope photograph of a coated surface of a sheet to which the swollen modified mannan sol was applied three times at a hydration ratio of 300-fold using a No. 5 coating rod.
FIG. 15 is a photograph showing the condition of chocolate confectionery placed on a functional paper product to which the swollen modified mannan sol was applied, for follow-up observation.

### DESCRIPTION OF THE EMBODIMENT

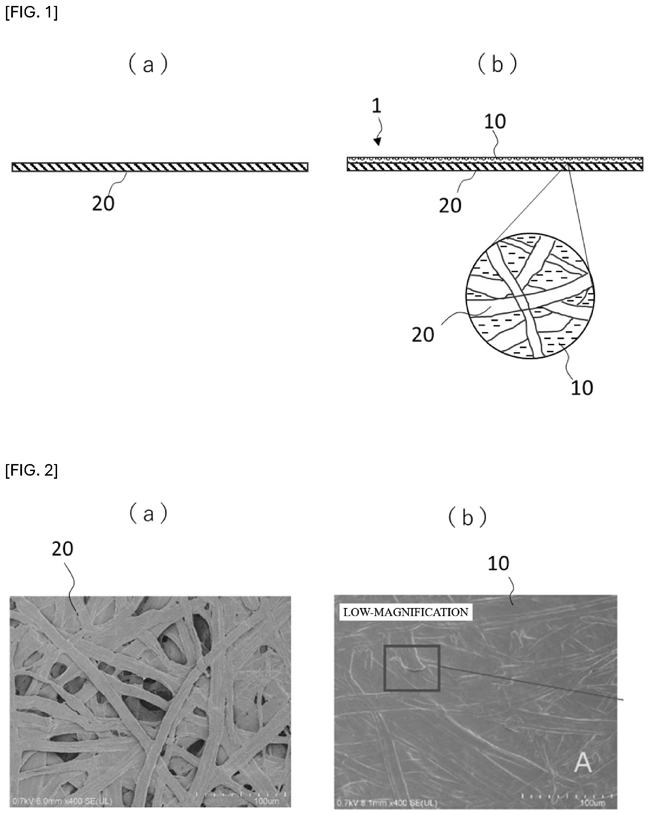

Hereinafter, a functional paper product according to an embodiment of the present invention will be described with reference to the drawings. FIG. 1 includes cross-sectional views of (a) a conventional paper product (i.e., a base sheet 10 on which no coating is formed) and (b) a functional paper product 1 according to the present embodiment. FIG. 2 includes (a) a cross-sectional view of a conventional paper product and (b) a scanning microscope photograph of a surface of the functional paper product according to the present embodiment.

The functional paper product 1 according to the present embodiment includes a base sheet 20 and a coating 10 formed on the base sheet 20.

There is no particular limitation on the type of the base sheet 20, and any paper used for the purpose of imparting water resistance, oil resistance, and durability can be used, such as a base sheet for food, a base sheet for tableware, and a containerboard. In particular, it is preferable to select a sheet for use in manufacturing paper food containers or paper tableware. Examples of food containers can include a paper tumbler, a paper cup, a paper plate, a paper tray, an ice cream container, a milk container, a sake container, a soft drink container, a ramen container, a rice bowl container, and a confectionery container. Examples of tableware can include a spoon, a fork, chopsticks, a straw, a stirrer, and a paper knife. Further, other paper products include a laundry detergent container, a kitchen detergent container, a dressing container, a pickle container, a liquid detergent and cosmetic container, a food container lid, hamburger wrapping paper and box, a paper bag, and other wrapping paper.

The coating 10 includes, as a main component, modified mannan obtained by releasing acetyl groups from konjac mannan, and is formed by curing a swollen modified mannan sol having, before curing, a viscosity of 3000 mPa·s or less, in a state where the swollen modified mannan sol is impregnated into inter-fiber voids between cellulose fibers of the base sheet 20.

As illustrated in FIG. 1(b), since the coating 10 is formed by curing the swollen modified mannan sol in a state of being impregnated into inter-fiber voids between cellulose fibers of the base sheet 20, the coating 10 and the base sheet 20 are firmly bonded together, and no adhesive is required to bond the base sheet 20 and the coating 10 together.

In FIG. 1(b), for the sake of explanation, the relationship between the base sheet 20 and the coating 10 is illustrated as a two-layer structure in appearance. However, in reality, as a result of curing the swollen modified mannan sol in a state of being impregnated into inter-fiber voids between cellulose fibers of the base sheet 20, the film thickness of the coating 10 is approximately the same as the thickness of the base sheet 20 and there is no clear boundary surface between the base sheet 20 and the coating 10. Therefore, the coating 10 can impart water resistance, oil resistance, and durability without interfering with the original uses and functions of conventional paper products.

As shown in FIG. 2(a), the base sheet 20 has many inter-fiber voids between the cellulose fibers, and therefore when liquid is poured onto the base sheet 20, the liquid will leak out through these inter-fiber voids. In contrast, the functional paper product 1 according to the present embodiment is formed such that the inter-fiber voids between the cellulose fibers of the base sheet 20 are covered with the coating 10, as shown in FIG. 2(b), and thus even when liquid is poured onto the functional paper product 1, the liquid is retained without leaking, achieving water resistance and oil resistance. Not only liquids such as water and oil, but also solids and gases can also be retained.

As shown in FIG. 2(b), it is preferable that the coating 10 is formed to completely fill the inter-fiber voids (holes) between the cellulose fibers of the base sheet 20, but depending on the application of the functional paper product according to the present embodiment, there is necessarily no need to form a complete coating without inter-fiber voids (holes). For example, this applies to the case where the functional paper product according to the present embodiment is a plate, a knife, a fork, a spoon, a bag, a wrapping paper, and the like, i.e., the case of applications that do not require complete water resistance and oil resistance. This also applies to the cases of a tumbler, a bowl, and a beverage pack. This is because when the coating 10 comes into contact with water, the coating 10 absorbs the water and swells, thereby filling the voids in the base sheet. This is because the raw material of the coating 10 is konjac mannan.

Even when the coating 10 absorbs water and swells, due to the inherent irreversibility of konjac, the coating 10 will not dissolve or return to the swollen modified mannan sol before curing. In addition, the coating 10 has a strength comparable to that of a general polyethylene film, and is therefore resistant to high and low temperatures, and to acids and alkalis.

The functional paper product according to the present embodiment can be formed into a cube, rectangular parallelepiped, approximately triangular pyramid, or other shape to obtain a beverage pack for containing beverages such as milk. Furthermore, the functional paper product can be formed into a bag shape to obtain a paper bag as an alternative to a shopping bag. Additionally, the paper after being dried can be formed into any shape, such as a spoon, a fork, chopsticks, a straw, a stirrer, and a plate. Such formation to a desired shape makes it possible to obtain various types of functional paper products. Furthermore, the functional paper product can also be used as wrapping paper for food such as hamburger. Note that the functional paper product according to the present embodiment is water-resistant and oil-resistant, and can therefore be used for purposes other than the functional paper products exemplified above, as long as water-resistant and oil-resistant properties are required.

An example of the functional paper product other than the functional paper products exemplified above is a corrugated board. In other words, by using a containerboard (linerboard and/or corrugating medium) as the base sheet 20, corrugated board that is more water-resistant, oil-resistant, and durable than general corrugated board can be provided. Corrugated board with such functions added can be used not only as a packaging material to protect products from scratches, dirt, crushing, and the like as in conventional packaging materials, but also for meat, seafood, vegetables, frozen foods, and other items that could only be packed in polystyrene foam containers.

Furthermore, examples of the functional paper product include uses for umbrella fabric, a raincoat, and a hat.

Next, a method for producing a functional paper product according to an embodiment of the present invention will be described. The swollen modified mannan sol to be applied to the functional paper product of the present invention is in the following range. Specifically, as disclosed in Japanese Patent No. 6089308, a modified mannan whose swelling is inhibited and which is obtained by mixing and stirring water, konjac mannan, and an alkali to release acetyl groups, is used. By neutralizing this modified mannan to lower the pH of the modified mannan to remove the swelling inhibition, a swollen modified mannan sol preferable to be used is obtained. This is because the sol from which acetyl groups have been released has a gelling ability even in a pH range from acidity to weakly alkaline, and is free from the konjac odor, acridity, and astringency.

However, in addition to the above-mentioned swollen modified mannan sol, any mannan sol may be used as long as the mannan sol has a gelling ability even under low pH conditions, such as a mannan sol that forms a gel in a pH range from acidity to neutrality, or a sol in which modified konjac powder deacetylated by alkali or enzymes is dispersed in water.

Next, a method for producing a swollen modified mannan sol to be applied to a paper product will be described.

A swollen modified mannan sol is obtained by subjecting konjac mannan to alkali treatment and neutralization treatment. Water, alkali, and konjac mannan are mixed and stirred for about 1 to 100 minutes to inhibit swelling, and acetyl groups are released to obtain a modified mannan. Swelling of the resulting modified mannan is released by neutralization, and when the modified mannan swells, stirring is stopped and the mannan is allowed to swell sufficiently. As a result, it is possible to obtain a swollen modified mannan sol.

Konjac mannan can be a mixture including one or two or more of ground konjac root, konjac flour, and konjac mannan obtained by washing konjac flour with an aqueous alcohol solution. Furthermore, there is no particular restriction on the variety of konjac root, and any variety of konjac genus of the Araceae family that contains konjac mannan may be used.

The ratio of konjac mannan to the alkaline solution is preferably 1 part konjac mannan to 10 to 500 parts water. The water temperature is preferably 60 degrees Celsius or less.

The alkali to be added may be any strong alkali, and examples thereof include calcium hydroxide, calcined shell calcium, and eggshell calcium. The amount of alkali needed is an amount that can release the acetyl groups of konjac mannan and inhibit swelling, and is greater than the amount of alkali used to produce normal konjac for food use. In the case of calcium hydroxide, the amount is preferably 7.6% or more of the weight of the konjac mannan.

The pH of the alkaline solution is preferably 11.7 or higher, and if the pH is too low, swelling cannot be inhibited. Depending on the variety and the degree of purification, if the pH is too high, it may not be possible to remove the swelling inhibition.

Swelling inhibition means inhibiting the inherent ability of konjac mannan to swell (rate, viscosity, etc.). For example, when normal konjac for food use is produced using premium konjac mannan of the KONJAC variety produced in Japan, calcium hydroxide is used in an amount from about 3 to 6% of the weight of the konjac mannan. However, by using a larger amount of calcium hydroxide that slows down the swelling rate or reduces the viscosity, the swelling can be inhibited.

In a mixture of water and alkali mixed with a modified mannan which is obtained by using an alkali treatment to release acetyl groups from konjac mannan and whose swelling is inhibited, the swelling inhibition is removed by using a food or neutralizing agent, to swell the modified mannan to obtain a swollen modified mannan sol. The food or neutralizing agent used may be any substance that can remove the swelling inhibition, preferably a food or neutralizing agent that lowers the pH. After the addition, stirring the mixture for a few seconds to 60 minutes is performed to swell the modified mannan. As a result, a swollen modified mannan sol can be obtained.

The swollen modified mannan sol produced as described above is applied to a base sheet and then dried. In this drying, hot air drying is preferably performed, but other drying methods such as natural drying and vacuum drying may also be used.

Next, the dried sheet (sheet obtained by applying and drying the swollen modified mannan sol) is formed into the shape of a desired paper product. This makes it possible to obtain a functional paper product of any shape, such as a plate, a tumbler, a bowl, or a box, that is water-resistant, oil-resistant, and durable.

The resulting functional paper product can then be formed into any shape, such as a cube, rectangular parallelepiped, approximately triangular pyramid, or bag shape, depending on the application. Additionally, the dried sheet can be formed into any shape, such as a spoon, a fork, chopsticks, a straw, or a stirrer. Such formation to a desired shape makes it possible to obtain various types of functional paper products. Furthermore, the functional paper product can also be used as wrapping paper for food such as hamburger.

Next, viscosity adjustment of the swollen modified mannan when applying the above-mentioned mannan to a base sheet will be described.

When functional paper products are mass-produced by applying the swollen modified mannan, it is desirable that the swollen modified mannan has a viscosity value of 3000 mPa·s or less, preferably 1000 mPa·s or less, depending on the specifications of existing manufacturing equipment.

It has been found that the viscosity value of the swollen modified mannan of the present invention decreases with increasing temperature. Therefore, three types of mannan with mannan concentrations of 1%, 1.2%, and 1.4% were tested in four temperature ranges of 28°C, 35°C, 40°C, and 50°C at a stirring speed of 90 rpm in a thermostatic water bath for five hours (viscosity values were measured every 1 hour). Note that the viscosity values described above were measured using a viscometer "TVB-10 type" manufactured by Toki Sangyo Co., Ltd., with a rotor M4, at 35°C (a speed of revolution of 30 rpm) after 4 hours.

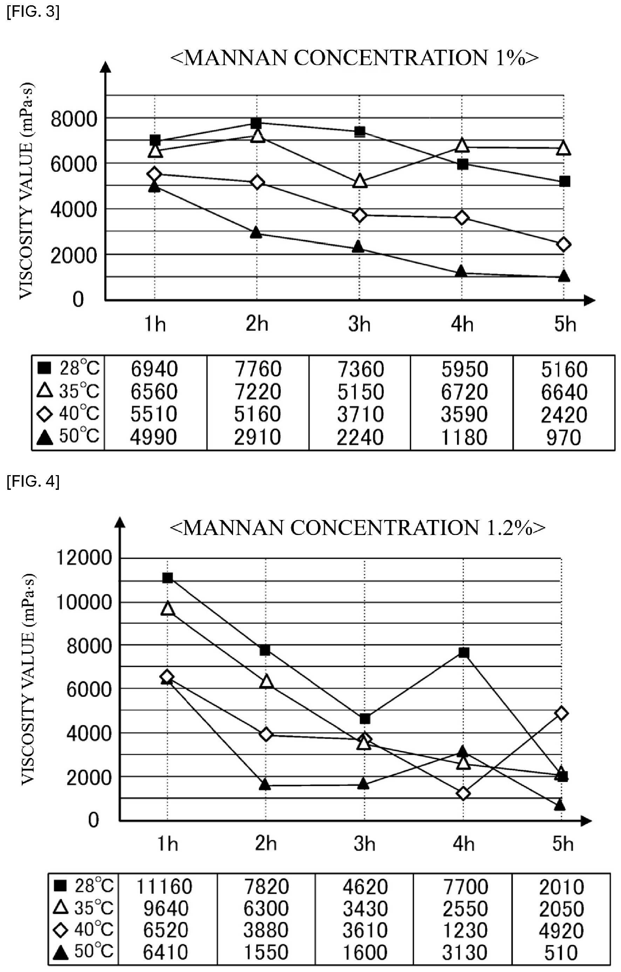

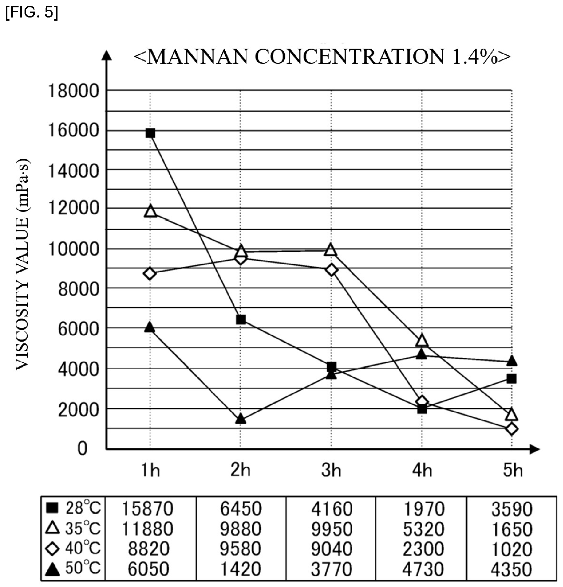

FIGS. 3 to 5 are graphs showing the test results for the different mannan concentrations. From the test results, it is found that for a mannan concentration of 1%, the viscosity value can be reduced to 3000 mPa·s or less by controlling the temperature within the range from 40 to 50°C. Furthermore, from these results, it is found that to further reduce the viscosity value, the mannan concentration needs to be reduced to 1% or less.

Therefore, to examine mannan concentrations of 1% or less, at four hydration ratios: 150-fold (mannan concentration 0.66%), 200-fold (mannan concentration 0.5%), 250-fold (mannan concentration 0.4%), and 300-fold (mannan concentration 0.33%), tests were carried out at 35°C in a thermostatic water bath with a stirring speed of 90 rpm for 4 hours (viscosity values were measured every 1 hour).

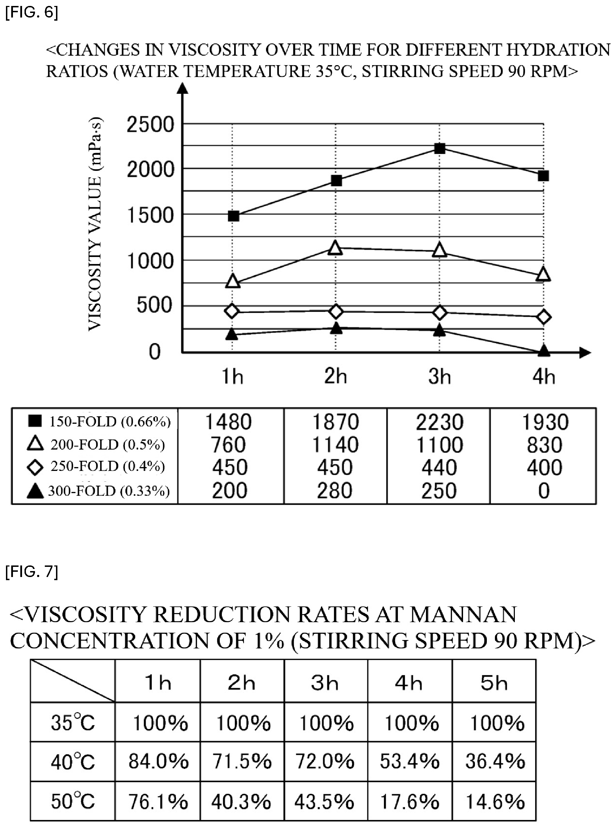

FIG. 6 is a graph showing the test results for the different mannan hydration ratios (numbers in parentheses are concentrations). From the test results, it is found that for all the hydration ratios, the viscosity value can be reduced to 3000 mPa·s or less, and that by increasing the hydration ratio to 200 times or more, the viscosity can generally be reduced to about 1000 mPa·s or less.

Note that FIG. 7 shows a table indicating viscosity reduction rates at a mannan concentration of 1%, for different temperature ranges and stirring times (when using a stirring speed of 90 rpm) obtained from the experimental results. As indicated in the table, increasing the temperature allows for a significant reduction in viscosity values. This indicates that even for a mannan concentration of 1%, 1.2%, or 1.4%, the viscosity value of the swollen modified mannan sol can be reduced to 3000 mPa·s or less, or even 1000 mPa·s or less, by increasing the temperature and adjusting the stirring time.

As discussed above, the viscosity value can be reduced by reducing the mannan concentration to 1% or less, but lowering the mannan concentration also leads to a reduction in the mannan fiber content contained in the mannan. This may affect the film thickness of the swollen modified mannan sol when applied to a base sheet and then dried, and penetration of water and oil into the cellulose fiber structure of the base sheet, and thus may affect the water resistance performance and oil resistance performance.

Therefore, the mannan fiber content was estimated for each hydration ratio, and the swollen modified mannan sol was actually applied to a base sheet and subjected to a 24-hour verification test to verify water resistance and oil resistance, including seepage into the back side of the sheet.

The swollen modified mannan sol used in the verification was produced as follows. Konjac mannan produced in Japan, which is derived from KONJAC plant, and calcium hydroxide were added to 100 cc of water at 12°C, and the resulting mixture was stirred for 10 minutes. Thereafter, 0.15 g of citric acid as a neutralizing agent was added, and when the resulting mixture swelled, the stirring was stopped and the mixture was left to stand for 60 to 120 minutes to prepare a swollen modified mannan sol. The swollen modified mannan sol thus prepared was then applied to a base sheet and then dried. Note that, to prepare a neutral swollen modified mannan sol, citric acid is added as a neutralizing agent, but to prepare an acidic swollen modified mannan sol, a slightly larger amount of citric acid is added. Note that, instead of citric acid, other acidic substances, acid-containing foods, or the like that can be used as a neutralizing agent may be used.

To confirm water resistance, a water absorption test was carried out using a water absorption tester. The water absorption tester used was a Gurley-Cobb size tester (standard type) manufactured by KUMAGAI RIKI KOGYO Co., Ltd. A base sheet for food containers was used as a test sheet. Furthermore, in applying the swollen modified mannan sol to the base sheet, coating rods No. 5 and No. 48 manufactured by KUMAGAI RIKI KOGYO Co., Ltd. were used to apply the swollen modified mannan sol such that thicknesses of 11.43 µm (for No. 5) and 109.8 µm (for No. 48) were achieved.

In the 24-hour verification test using the Gurley-Cobb size tester, a tea drink was used as a sample to confirm water resistance, and a coffee drink and household cooking oil were used as samples to confirm oil resistance. Additionally, confirmation was carried out by using direct contact with chocolate (continuous contact for about 8 months).

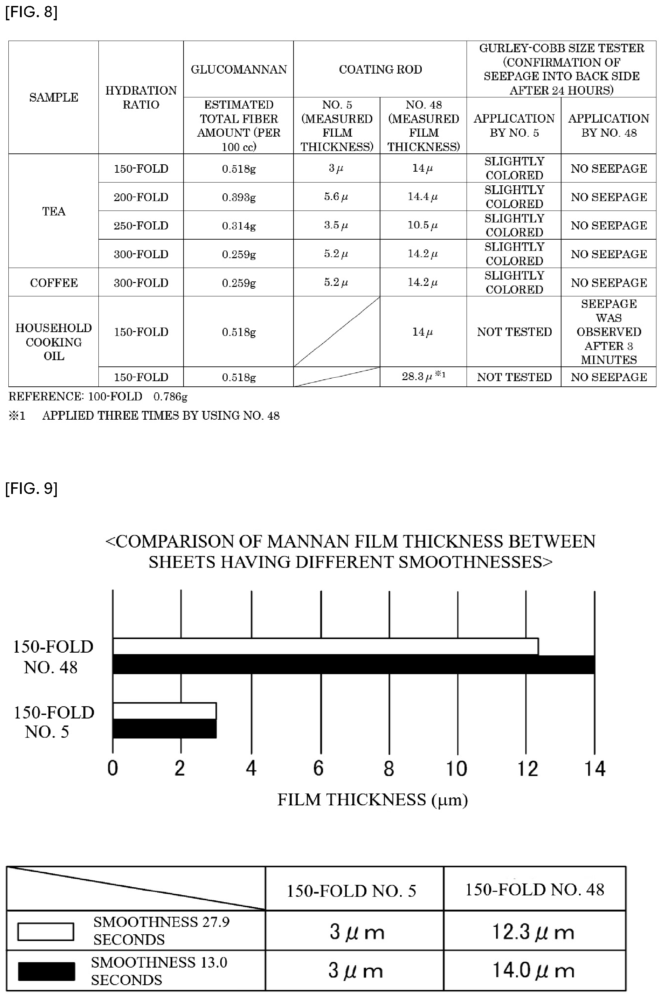

The results of the verification are shown in the table of FIG. 8. As shown in the table, for the relationship between the mannan content and water resistance/oil resistance, it is understood that the lower limit is about 0.26 g of mannan per 100 cc, and that the mannan content of 0.5 g or more is preferable whenever possible. Thus, it is possible to adjust the mannan content depending on the production cost and application (required water resistance and oil resistance).

Furthermore, for the relationship between the film thickness of the applied swollen modified mannan sol before curing and the water resistance/oil resistance, the lower limit of the film thickness before curing is about 3 µm, depending on the content of the swollen modified mannan sol, and the film thickness is preferably 5 µm or more, if possible. As shown in the table, for household cooking oil, the oil resistance was improved by applying the swollen modified mannan sol multiple times to increase the film thickness. Thus, it is possible to adjust the film thickness before curing depending on the production cost and application (required level of water resistance and oil resistance).

With regard to water resistance, it is possible to solve cost problems by changing the hydration ratio and film thickness before curing depending on the application and use conditions of the paper product to be used. For example, in the case of manufacturing a paper tray with the swollen modified mannan sol applied thereto, as a substitute for a PVC food tray sold at general mass retailers, if the food contains a low amount of water, by setting the hydration ratio to about 500-fold and setting the film thickness before curing to about 3 µm, it is possible to manufacture the paper tray at lower cost compared to the PVC food tray. Conversely, if the food contains a large amount of water, by, for example, applying the swollen modified mannan sol to the front and back of the tray, it is possible to prevent the water from penetrating.

For a paper cup, water resistance can be ensured by applying the swollen modified mannan sol to the inside surface that comes into contact with water under normal use conditions. However, when the paper cup is used for a long period of time, for example, to hold ice (e.g., when the paper cup is used for iced coffee), it is possible to obtain performance equivalent to that of a PVC cup by applying the swollen modified mannan sol to the inside and outside of the paper cup. Of course, by applying the swollen modified mannan sol to the inside and outside of a paper cup lid, it is possible to obtain the paper cup lid having performance equivalent to that of a PVC cup lid.

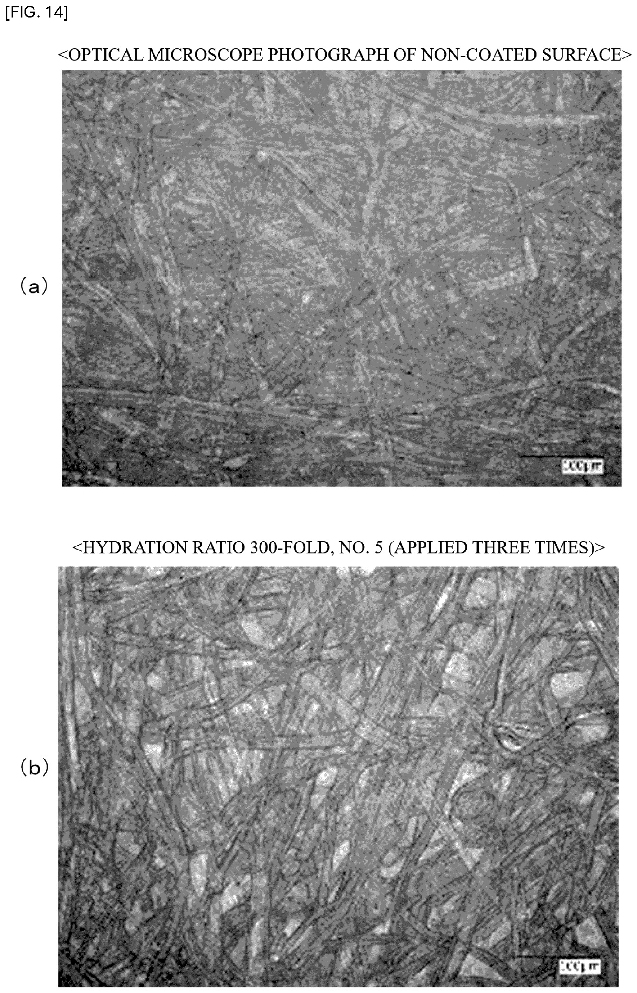

Furthermore, based on the above-mentioned results of verification, as shown in FIG. 14, verification was also carried out in the case of direct contact with chocolate (continuous contact for about 8 months). In the example shown, despite use of a mannan aqueous solution containing very little mannan dietary fiber (a hydration ratio of 250-fold) and a very small application amount (0.11 g/m²), no oil penetration into the contact surface and back side of the sheet to which the swollen modified mannan sol was applied was observed. Therefore, it was confirmed that the sheet exhibits oil resistance equivalent to that of PVC-treated wrapping materials, and it can be used as a wrapping material for a chocolate product in the same way as PVC-treated wrapping materials and aluminum wrapping materials.

Next, the water resistance and/or oil resistance performance may vary greatly depending on the treated conditions of the surface of the sheet to which the swollen modified mannan sol was applied. This is due to the properties of mannan; for example, when the swollen modified mannan sol is applied to copy paper used in general jet printers and water resistance and oil resistance tests are carried out, the water resistance and oil resistance performance tends to be lower than that of general paper with an untreated surface. The same tendency is observed in paper and the like whose surface has been treated to make the surface water-resistant.

Therefore, for confirmation, the swollen modified mannan sol was actually applied to base sheets with different smoothness, with coating rods No. 5 and No. 48. As a result of the confirmation, as shown in FIG. 9, it is found that, particularly when increasing the film thickness, the base sheet with a lower smoothness allows for a thicker film thickness, and the base sheet with a lower smoothness is preferable. In other words, making the smoothness of the base sheet as low as possible and applying the swollen modified mannan sol to an untreated surface will lead to improved water resistance and/or oil resistance. Furthermore, if the swollen modified mannan sol is applied to a base sheet whose surface has been treated with chemicals and the like to make the surface water-resistant, the sufficient film thickness cannot be achieved, and thus the water resistance and/or oil resistance performance cannot be improved.

Next, the results of a water resistance test in which the swollen modified mannan sol with a hydration ratio from 100- to 500-fold was applied to a hamburger wrapping paper base sheet (45 g/m²), which is a functional paper product, will be described. Specifically, in the water resistance test, the swollen modified mannan sol was applied to a hamburger wrapping paper base sheet using coating rods No. 5 and No. 48, which was formed into a box-shaped container (7.5 cm x 8 cm, depth 3.8 cm). About 40 cc of tea at room temperature was poured into the box-shaped container, and the elapsed time until water leakage was observed was investigated.

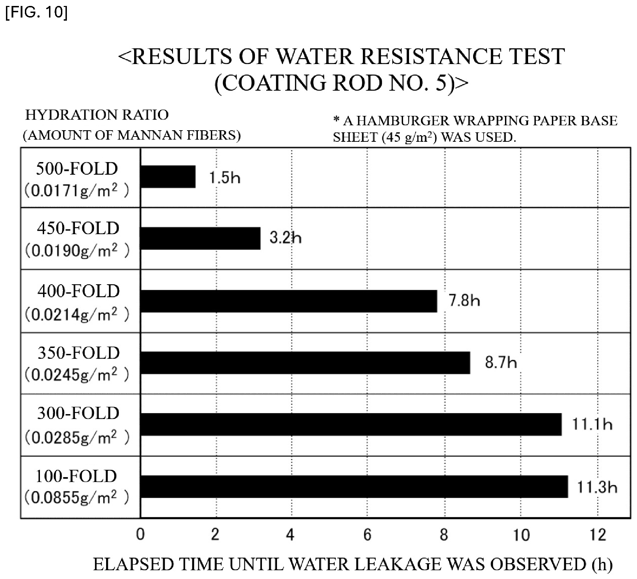

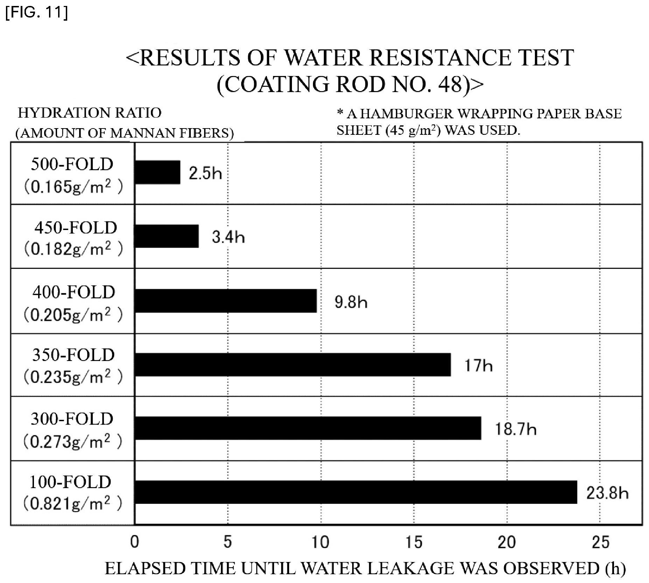

As the results of the above water resistance test, FIG. 10 shows the test results of hamburger wrapping paper to which the swollen modified mannan sol was applied using the coating rod No. 5, and FIG. 10 shows the test results of hamburger wrapping paper to which the swollen modified mannan sol was applied using the coating rod No. 48. Note that FIGS. 10 and 11 each indicate an estimated amount of mannan fibers along with each hydration ratio.

Furthermore, in the above water resistance test, as a comparison target, the water resistance test was carried out using a hamburger wrapping paper base sheet to which the swollen modified mannan sol was not applied, and water leakage from the box-shaped container was observed in 4 minutes and 15 seconds. On the other hand, it was found that the hamburger wrapping paper to which the swollen modified mannan sol was applied using the coating rod No. 5 exhibits water resistance of 1.5 h (hours) even at a hydration ratio of 500-fold, and 11.3 h (hours) at a hydration ratio of 100-fold. Furthermore, it was found that hamburger wrapping paper to which the swollen modified mannan sol was applied using the coating rod No. 48 exhibits water resistance of 2.5 h (hours) even at a hydration ratio of 500-fold, and 23.8 h (hours) at a hydration ratio of 100-fold.

From the results of the water resistance test described above, it is possible to significantly improve the water resistance by setting the hydration ratio to at least 500-fold or less. More preferably, the hydration ratio is 400-fold or less, and even more preferably, 300-fold or less. In these cases, water resistance for half a day or more can be ensured, and thus it is possible to significantly improve the water resistance.

Furthermore, as can be seen from the amounts of mannan fibers listed in the water resistance test results shown in FIG. 10, by applying an amount of mannan fibers of at least 0.01 g/m² or more, preferably 0.017 g/m² or more to the base sheet, it is possible to significantly improve the water resistance.

Next, the effect of applying the swollen modified mannan sol on the durability of the base sheet was verified. Conventionally, a final product has been manufactured by increasing the thickness of a base sheet depending on the required durability of the paper product. However, this will lead to an increase in the amount of base sheet used, which increases costs and environmental impact.

Therefore, in this verification, the swollen modified mannan sol was applied to copy paper, and the burst strength and the like were measured using a KRK burst strength tester manufactured by KUMAGAI RIKI KOGYO Co., Ltd., and the durability (tensile strength and the like) was measured using a horizontal tensile tester (tabletop type). The results of the burst strength test showed that when the swollen modified mannan sol was applied to one side, the burst strength was improved by 140.6% compared to when not applied, and when the swollen modified mannan sol was applied to both sides, the burst strength was improved by 158.1% compared to when not applied. Furthermore, in terms of tensile strength, when the swollen modified mannan sol was applied to one side, the breaking length in the machine direction was improved by 110.1% and the breaking length in the cross-machine direction was improved by 110.9% compared to paper to which the swollen modified mannan sol was not applied.

Containers made of a corrugated board, paper containers, and the like can be damaged from the outside when stacked or during transportation, for example. However, the above-mentioned verification results indicate that to ensure the required burst strength and tensile strength, by applying the swollen modified mannan sol to one side of the sheet as needed, or by applying the swollen modified mannan sol to both sides, it is possible to improve the durability of the paper product without increasing the thickness of the base sheet or the amount of base sheet as in conventional methods.

In other words, in the case of corrugated boards, by applying the swollen modified mannan sol to one side, it is possible to ensure water resistance and improve the burst strength and tensile strength. This also makes it possible to reduce the thickness of a containerboard (linerboard) that has conventionally been used, and thus the costs can be reduced. Of course, by applying the swollen modified mannan sol to both sides of the containerboard if necessary, it is possible to further enhance the burst strength and tensile strength. Furthermore, the same effect can be obtained by applying the swollen modified mannan sol to a corrugating medium necessary for the strength of the corrugated board.

A functional paper product including a linerboard as the base sheet 10 and the coating 20 formed on the surface of the linerboard was manufactured. Table 1 shows the results of examining the breaking strength, burst index, tensile strength, and breaking length, which are indicators of durability, for the functional paper product.

As the linerboard, an LB-grade linerboard according to JIS standard (JIS P3902) was used. The conditions for applying the swollen modified mannan sol were as follows: the swollen modified mannan sol was applied once using a No. 5 or No. 48 coating rod at a hydration ratio of 150-fold (mannan concentration of 0.66%). The conditions for the test carried out were as follows: temperature, 22.6°C; humidity, 38%; test machine, C type (kPa); span, 100 mm.

As shown in Table 1, liners (sample 1, sample 2) on which a coating of the swollen modified mannan was formed showed significant improvements in all of the following properties compared to the base sheet: burst strength, burst index, tensile strength, and breaking length. These results demonstrate that by forming a coating by curing the swollen modified mannan sol, the quality of corrugated board can be improved without increasing the paper thickness. Furthermore, the formed coating has high frictional force, and therefore, forming the coating also increases the frictional resistance of the corrugated board, making the usual friction treatment for a corrugated board unnecessary. Note that, although data is not shown, a functional paper product in which the coating 20 is formed on a linerboard is also imparted with water resistance and oil resistance.

**[Table 1]**

| Sample | Application amount | Nominal basis weight (g/m²) | Burst strength (kPa) | Burst index (kPa·m²/g) | Tensile strength (kN/m) | | Breaking length MD (km) |
|---|---|---|---|---|---|---|---|
| | | | | | MD | CD | |
| (Reference) JIS standard | | 160 ± 3% | 288 or more | 1.8 or more | | | |
| Linerboard | 0 | 160 | 371 | 2.32 | 8.18 | 3.61 | 5.21 |
| Sample 1 | No. 5 | | 484 | 2.85 | 11.10 | 4.82 | 6.66 |
| Sample 2 | No. 48 | | 469 | 2.76 | 11.16 | 7.75 | 6.70 |

A functional paper product including a corrugating medium as the base sheet 10 and the coating 20 formed on the surface of the corrugating medium was manufactured. Table 2 shows the results of examining the burst strength, strength in the machine direction (tensile strength and elongation), and strength in the cross-machine direction (tensile strength and elongation), which are indicators of the durability of a corrugating medium, for the functional paper product. The measuring equipment and conditions are the same as those for the linerboard described above.

As the corrugating medium, an MB-grade corrugating medium according to JIS standard (JIS P3902) was used. The conditions for applying the swollen modified mannan sol were as follows: the swollen modified mannan sol was applied once using a No. 5 or No. 48 coating rod at a hydration ratio of 150-fold (mannan concentration of 0.66%).

As shown in Table 2, liners (samples 3 and 4) on which a coating of the swollen modified mannan was formed showed equal or better performance in all of the following properties compared to the corrugating medium: burst strength, strength in the machine direction, and strength in the cross-machine direction. These results demonstrate that by forming a coating by curing the swollen modified mannan sol on a corrugating medium, the durability of the corrugating medium can be improved. A corrugating medium is used to impart strength to a corrugated board, and the corrugating medium in the present embodiment can impart strength to a corrugated board without increasing the weight of the corrugating medium. Note that, although data is not shown, a functional paper product in which the coating 20 is formed on a corrugating medium is also imparted with water resistance and oil resistance.

**[Table 2]**

| Sample | Application amount | Nominal basis weight (g/m²) | Burst strength (kPa) | Strength in MD | | Strength in CD | |
|---|---|---|---|---|---|---|---|
| | | | | Tensile strength (kN/m) | Elongation (%) | Tensile strength (kN/m) | Elongation (%) |
| (Reference) JIS standard | | | | 4.8 or more | | | |
| Corrugating medium | 0 | 120 | 409 | 7.6 | 2.11 | 5.4 | 4.31 |
| Sample 3 | No. 5 | | 403 | 7.8 | 2.45 | 5.7 | 4.79 |
| Sample 4 | No. 48 | | 440 | 7.8 | 2.8 | 5.9 | 5.37 |

### (Verification by Microscope Photographs)

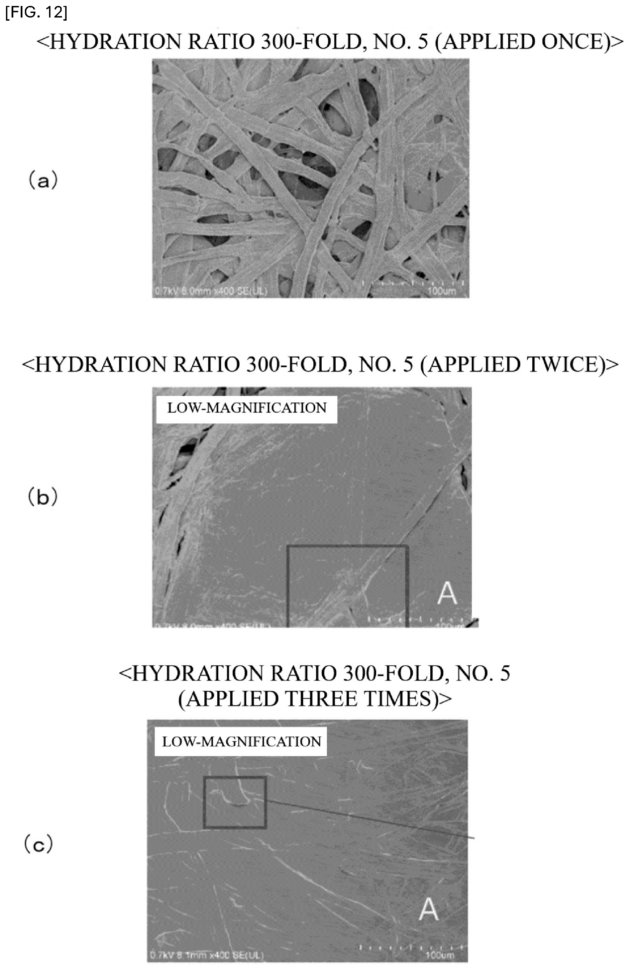

The following description is based on microscope photographs of coated surfaces to which the swollen modified mannan sol was applied. FIG. 12 shows scanning microscope photographs of paper to which the swollen modified mannan sol was applied, (a) shows the condition of a coated surface to which the swollen modified mannan sol was applied once at a hydration ratio of 300-fold using a No. 5 coating rod; (b) shows the condition of a coated surface to which the same swollen modified mannan sol as (a) was applied twice; and (c) shows the condition of a coated surface to which the same swollen modified mannan sol as (a) was applied three times.

As shown in FIG. 12(a), it can be seen that a film of the swollen modified mannan sol is formed in the inter-fiber voids between the cellulose fibers of the paper, while there are some voids that appear black in places. Furthermore, as shown in FIG. 11(b), it can be seen that when the swollen modified mannan sol was applied twice, a film of the swollen modified mannan sol is formed more thoroughly in the inter-fiber voids between the cellulose fibers, and the amount of voids is significantly reduced. Moreover, as shown in FIG. 12(c), it can be seen that when the swollen modified mannan sol was applied three times, almost no voids are found, and a film of the swollen modified mannan sol is reliably formed over a wide area.

In other words, by increasing the number of times the swollen modified mannan sol is applied, a film of the swollen modified mannan sol is evenly formed on the surface of the paper, and it can be confirmed that the mannan fibers penetrate into the inter-fiber voids between the cellulose fibers of the base sheet. This contributes greatly to the water resistance and oil resistance of the functional paper product. Note that a base sheet whose surface has been treated with anti-bleeding agents or chemicals for waterproofing is not preferable because in such a base sheet, the film formation of mannan as described above is inhibited.

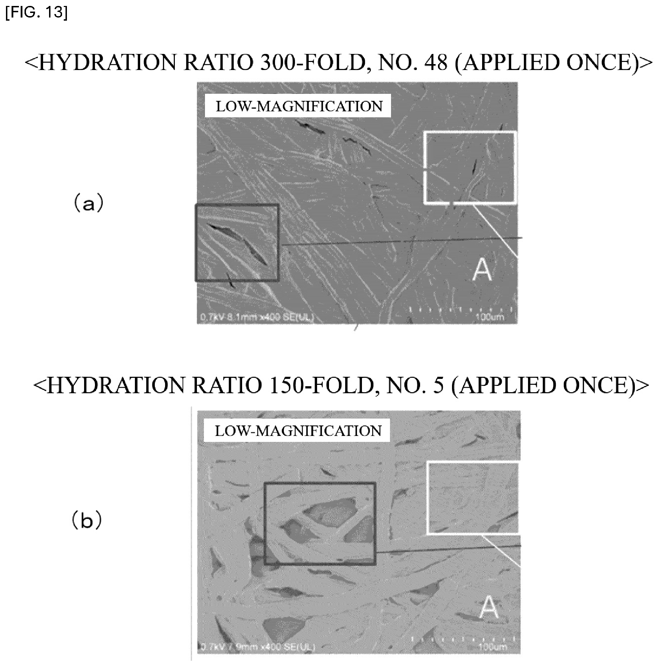

Next, FIG. 13(a) shows a scanning microscope photograph of a coated surface to which the swollen modified mannan sol was applied once at a hydration ratio of 300-fold using a No. 48 coating rod, and FIG. 13(b) shows a scanning microscope photograph of a coated surface to which the swollen modified mannan sol was applied once at a hydration ratio of 150-fold using a No. 5 coating rod. Comparing these, it can be seen that there are fewer remaining inter-fiber voids in FIG. 13(a) than in FIG. 13(b). Therefore, even when the hydration ratio is increased, by increasing the film thickness of the swollen modified mannan sol, it is possible to more reliably form a film of the swollen modified mannan sol on the surface of the base sheet.

Furthermore, FIG. 14(a) shows an optical microscope photograph of a surface of a base sheet to which the swollen modified mannan sol was not applied, and FIG. 14(b) shows an optical microscope photograph of a coated surface of a sheet to which the swollen modified mannan sol was applied three times at a hydration ratio of 300-fold using a No. 5 coating rod. As shown, it can be seen that, for the image of the surface to which the swollen modified mannan sol was not applied, due to diffuse reflection of light caused by the cellulose fibers of the base sheet, the outlines of the cellulose fibers are vague and the overall image is dark. On the other hand, for the image of the surface to which the swollen modified mannan sol was applied three times and where a film of the swollen modified mannan sol was formed all over the surface, an iridescent film can be observed, the outlines of the cellulose fibers can clearly be observed, and the overall image is bright.

### (Follow-up Observation of Foods Containing Fats and Oils)

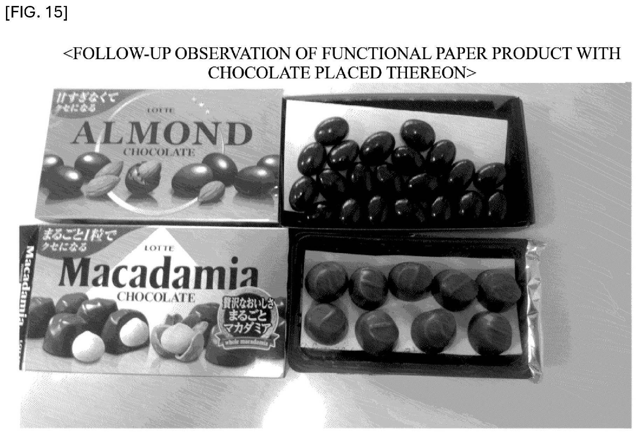

FIG. 15 is a photograph showing the condition of chocolate confectionery placed on a functional paper product to which the swollen modified mannan sol was applied, for follow-up observation. The example shown in the photograph is the case where the hydration ratio is 250-fold, and no oil seepage was observed over an eight-month period of follow-up observation.

### (Other Embodiments)

Several embodiments of the functional paper product according to the present invention have been described above. However, the present invention is not limited to the above embodiments, and the following variations are possible.

For example, the above-discussed verification results are mainly focused on the swollen modified mannan sol with hydration ratios of from 100-fold to 500-fold, but the hydration ratio is not necessarily limited to this range. For example, the hydration ratio may also be from 500-fold to 3000-fold, and verification has demonstrated that water resistance and oil resistance can be ensured even within this range. Within this range of hydration ratio, the viscosity becomes very low, which facilitates application by using general-purpose machines.

On the other hand, using a hydration ratio from 500-fold to 3000-fold results in a low concentration of the swollen modified mannan sol. Thus, depending on the water resistance and oil resistance required of the functional paper product, it is necessary to satisfy the required performance by, for example, increasing the number of applications. Therefore, from the viewpoint of using existing facilities of paper manufacturers, printing companies, and the like and mass-producing functional paper products efficiently and with high quality, the preferable range of the hydration ratio is from 100-fold to 500-fold.

### INDUSTRIAL APPLICABILITY

According to the present invention, it is possible to efficiently and inexpensively mass-produce a functional paper product that is water-resistant and oil-resistant while suppressing generation of konjac odor, acridity, astringency, and the like, in existing facilities of paper manufacturers, printing companies, and the like without requiring to install new application equipment.

### DESCRIPTION OF REFERENCE NUMERALS

1 ... Functional paper product according to present embodiment
10 ... Coating
20 ... Base sheet

## Claims

1. A functional paper product comprising:
a base sheet; and
a coating formed on the base sheet,
wherein the coating includes, as a main component, modified mannan obtained by releasing acetyl groups from konjac mannan, and
the coating is formed by curing a swollen modified mannan sol having, before curing, a viscosity of 3000 mPa·s or less, in a state where the swollen modified mannan sol is impregnated into inter-fiber voids between cellulose fibers of the base sheet.

2. The functional paper product according to claim 1, wherein a viscosity of the swollen modified mannan sol before curing is 1000 mPa·s or less.

3. The functional paper product according to claim 1 or 2, wherein an amount of mannan fibers in the swollen modified mannan sol is 0.01 g/m² or more.

4. The functional paper product according to claim 1, wherein the base sheet is at least one selected from the group consisting of a base sheet for food containers, a base sheet for tableware, and a containerboard.

5. The functional paper product according to claim 1, wherein the functional paper product is at least one selected from the group consisting of a paper tumbler, a paper cup, a paper plate, a paper tray, an ice cream container, a milk container, a sake container, a soft drink container, a ramen container, a rice bowl container, a confectionery container, a paper bag, a spoon, a fork, chopsticks, a straw, a stirrer, a paper knife, a laundry detergent container, a kitchen detergent container, a dressing container, a pickle container, a liquid detergent and cosmetic container, a food container lid, hamburger wrapping paper and hamburger box, a paper bag, wrapping paper, and a corrugated board.

6. The functional paper product according to claim 1, wherein the functional paper product is at least one selected from the group consisting of an umbrella, a raincoat, and a hat.
